# EUROPÄISCHE PATENTSCHRIFT

(11) **EP 0 614 565 B1**
(45) Veröffentlichungstag und Bekanntmachung des Hinweises auf die Patenterteilung: **14.08.1996**
(21) Anmeldenummer: 92923756.8
(22) Anmeldetag: 20.11.1992
(51) Int. Cl.: G11B 15/665, G05B 19/35

(54) **VERFAHREN ZUR POSITIONSERMITTLUNG IN EINEM KASSETTENRECORDER**
METHOD OF DETERMINING THE SWITCH POSITION IN A CASSETTE RECORDER
PROCEDE POUR LA DETERMINATION DE LA POSITION DANS UN ENREGISTREUR A CASSETTES

(30) Priorität: 29.11.1991 DE 4139218
(43) Veröffentlichungstag der Anmeldung: 14.09.1994
(73) Patentinhaber: DEUTSCHE THOMSON-BRANDT GMBH, 78048 Villingen-Schwenningen (DE)
(72) Erfinder: KAADEN, Jürgen, D-78052 Villingen-Schwenningen (DE); REINER, Gerhard, D-78136 Schonach (DE)
(74) Vertreter: Einsel, Robert, Dipl.-Ing.
(86) Internationale Anmeldenummer: EP9202671
(87) Internationale Veröffentlichungsnummer: WO9311534

(56) Entgegenhaltungen:
- EP-A- 0 042 960
- EP-A- 0 104 379
- EP-A- 0 294 918
- WO-A-85/03368
- DE-A- 3 043 041
- DE-A- 3 308 110
- DE-A- 4 017 837
- FR-A- 2 541 010
- US-A- 4 481 551
- PATENT ABSTRACTS OF JAPAN vol. 9, no. 72 (P-345) 2. April 1985 & JP-A-59 203 264
- PATENT ABSTRACTS OF JAPAN vol. 8, no. 82 (P-268) 14. April 1984 & JP-A-58 224 462

## Beschreibung

Die Erfindung geht aus von einem Verfahren gemäß dem Oberbegriff des Anspruchs 1. Das Verfahren ist insbesondere anwendbar für Magnetbandgeräte für Analog- und/oder Digitalaufzeichnung von Video- und/oder Audiodaten sowie Datenrecorder, die über Positionsschalter verfügen. Das ist z.B. bei der Kassettenkennung oder der Lademechanikpositionsrückmeldung der Fall.

Bei einer Bandlademechanik in einem Magnetbandrecorder mit einer rotierenden Kopftrommel wird durch die Mechanik das Band aus der Kassette herausgezogen und über einen Winkel von etwa 180° um die Kopftrommel herumgelegt. Beim Entladevorgang wird das Band wieder in Richtung der Kassette geführt. Für die Mechanik sind verschiedene Systeme bekannt wie z.B. das M-Loading bei VHS und das C-Loading bei Video 2000. Bei beiden Systemen werden für die verschiedenen Betriebszustände wie Wiedergabe, Pause, Umspulen, Kassettenauswurf usw. unterschiedliche Positionen benötigt. Jede einzelne Position stellt einen Schaltzustand dar, der als Rückmeldung für die steuernde Elektronik dient. Dabei werden überwiegend Schaltschieber verwendet oder auch Codierschalter oder Einzelschalter. Die Anzahl der Rückmeldeleitungen beträgt bei handelsüblichen Geräten etwa 3 bis 4 je nach Komplexität der Mechanik.

Es hat sich gezeigt, daß in der Praxis die Unterschiede zwischen den den einzelnen Positionen zugeordneten Spannungswerten sehr gering ist, wodurch die Auswertung unsicher wird. Eine größere Sicherheit läßt sich mit engtolerierten Widerständen und einer stabilisierten Spannung an dem Widerstandsnetzwerk und dem Referenzeingang des zur Auswertung dienenden A/D-Wandlers erreichen. Dadurch wird jedoch der Kostenaufwand für die Schaltung beträchtlich erhöht. Der Erfindung liegt die Aufgabe zugrunde, trotz der geringen Unterschiede zwischen den einzelnen ermittelten Spannungswerten eine sichere Auswertung zu gewährleisten, ohne daß engtolerierte Widerstände und eine stabilisierte Spannung an dem Widerstandsnetzwerk und dem A/D-Wandler benötigt werden. Diese Aufgabe wird durch die im Anspruch 1 angegebene Erfindung gelöst. Vorteilhafte Weiterbildungen der Erfindung sind in den Unteransprüchen angegeben.

Bei dem erfindungsgemäßen Verfahren werden somit engtolerierte Widerstände oder stabilisierte Spannungen durch einen bewußt eingeführten Eichvorgang ersetzt. Durch diesen Eichvorgang werden praktisch alle Abweichungen in den Widerstandswerten oder der Betriebsspannung erfaßt und neutralisiert, indem die im Eichbetrieb jeweils zu den Positionen gemessenen Spannungswerte gespeichert und bei Normalbetrieb als Sollwerte verwendet werden. Es werden also für den Vergleich in der Auswerteelektronik nicht die theoretisch richtigen Sollwerte, sondern die in der Praxis bei den einzelnen Positionen tatsächlichen auftretenden, in einem Eichvorgang ermittelten und gespeicherten Werte als Sollwerte verwendet. Das Widerstandsnetzwerk kann dann mit üblichen, preiswerten Widerständen hoher Toleranz realisiert werden, während für die Betriebsspannung für das Netzwerk und den A/D-Wandler keine hochstabile Spannung erforderlich ist.

Die Erfindung wird im folgenden anhand der Zeichnung erläutert. Darin zeigen
- Fig. 1: ein vereinfachtes Prinzipschaltbild für die Positionsermittlung,
- Fig. 2: ein Widerstandsnetzwerk mit der Auswerteelektronik und
- Fig. 3: ein Zahlenbeispiel für die bei den einzelnen Positionen ermittelten Spannungswerte.

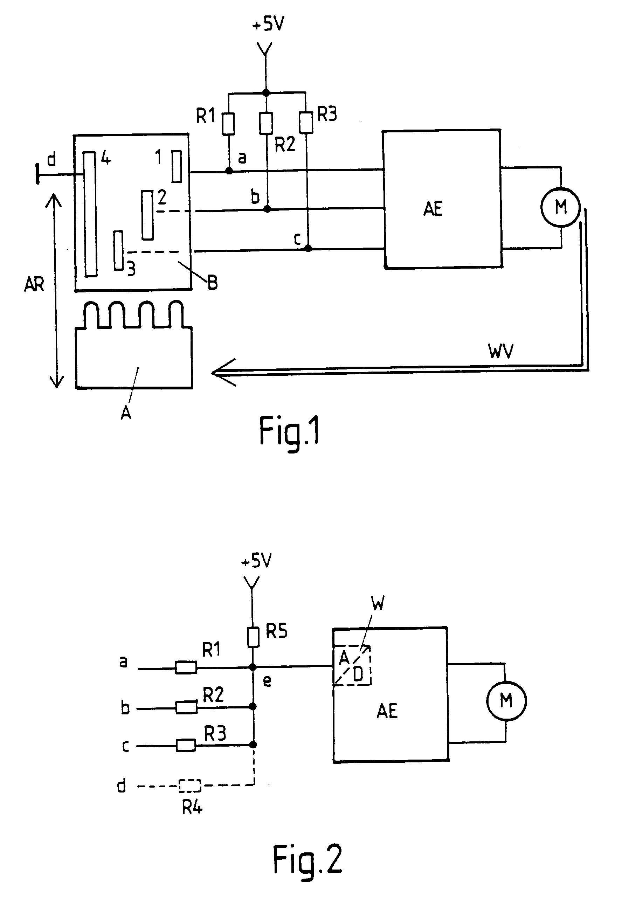

In Fig. 1 wird der Schleifer A von dem Motor M durch die Wirkverbindung WV über den Positionsgeber B geführt, der drei Kontaktbahnen 1, 2, 3 sowie eine geerdete Kontaktbahn 4 aufweist. Durch den Schleifer A werden je nach seiner Stellung die Kontaktbahnen 1, 2, 4 mit der Kontaktbahn 4 verbunden. Bei Beschaltung der Kontaktbahn 1, 2, 3 mit jeweils einem Widerstand an die Versorgungsspannung lassen sich bei Anschluß der Kontaktbahn 4 an Erde an den Leitungen a, b, c Schaltsignale abgreifen, die dann der Auswertelektronik AE zugeführt werden. Das Widerstandsnetzwerk ist durch die gleich großen Widerstände R1, R2, R3 mit je 22 kohm gebildet und an eine Betriebsspannung von +5 Volt angeschlossen. Eine vorteilhafte Vereinfachung ist die Reduzierung der Leitungen auf eine einzige, wobei über ein Widerstandsnetzwerk bei verschiedenen Schaltzuständen unterschiedliche Gleichspannungen gebildet werden. Die Auswerteelektronik AE enthält einen A/D-Wandler, der die von den Leitungen a, b, c gelieferten analogen Spannungen in digital unterscheidbare Werte umwandelt.

In Fig. 2 ist ein derartiges Widerstandsnetzwerk mit Widerständen R1, R2, R3, R4 und R5 dargestellt, wobei die Widerstände folgende Werte haben:
R1 = 27 kOhm
R2 = 47 kOhm
R3 = 100 kohm
R4 = 220 kOhm
R5 = 39 kOhm.

Der gemeinsame Ausgang e der Widerstandsmatrix R1 bis R5 ist an den Eingang des A/D-Wandlers W innerhalb der Auswertelektronik AE angeschlossen.

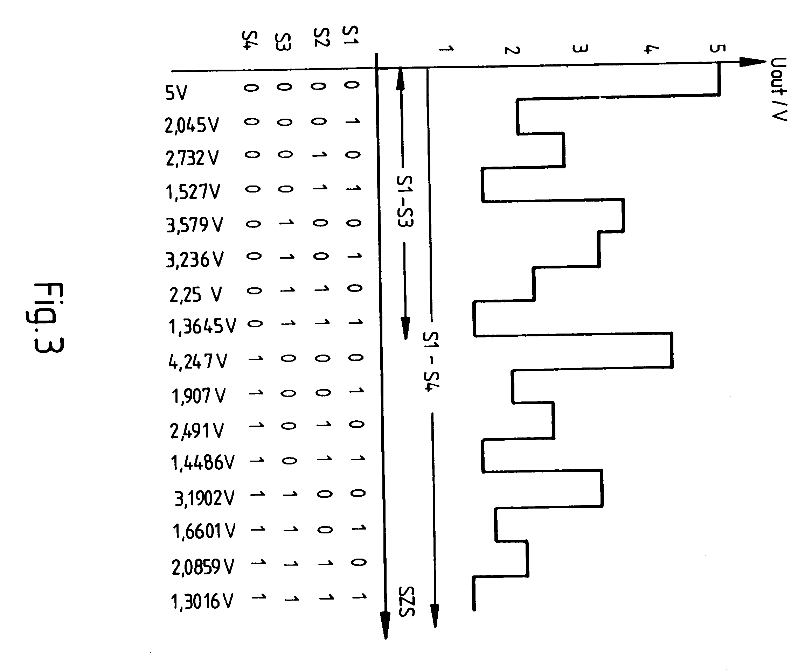

Fig. 3 zeigt die jeweils sich ergebende Gleichspannung bei den einzelnen möglichen Schaltzuständen in numerischer und graphischer Form. Wenn der Auswertelektronik AE bekannt ist, welche Spannungswerte tatsächlich auftreten, so lassen sich die Grenzwerte für die Erkennung jedes einzelnen Spannungswertes genau festlegen. Während einer Testphase, z.B. der Gerätemontage oder im Servicefall, wird ein Eichlauf des A/D-Wandlers W mit dem angeschlossenen Netzwerk durchgeführt. Die dabei gemessenen Werte werden gespeichert und bei jedem Lade/Entladevorgang als Sollwerte verwendet.

Der Eichbetrieb wird an einer vorbestimmten Ausgangsposition gestartet. Diese "Nullposition" wird zunächst nach Aufruf der Eichfunktion angesteuert, im folgenden mit Phase A bezeichnet. Im vorliegenden Fall ist die Nullposition die Entladeendstellung. Hierzu gibt es verschiedene Möglichkeiten:
1. Den Entladeablauf so lange fortzusetzen, bis die Nullposition unter allen Umständen erreicht ist. Bei diesem Ablauf ist ein Zeitkriterium wirksam.
2. Den Ablauf bis zur deutlichen Erhöhung des Lademotorstromes auszuführen. Dabei handelt es sich um eine Stromabfrage.
3. Den Ablauf bis zum Erreichen einer übergeordneten Schaltposition fortzuführen, z.B. Position "Kassette ausgeworfen". Dabei handelt es sich somit um eine Schalterabfrage.

Der sich jetzt anschließende Schritt, nämlich die Phase B, ist der eigentliche Eichbetrieb, bei dem die Lademechanik mit geringer Geschwindigkeit im getakteten Betrieb, d.h. zwei Takte "Aus" und ein Takt "Ein", in Richtung Bandladeendposition angetrieben wird. Jegliche Spannungsänderung auf der Meßleitung über einen Schwellwert hinaus führt zu einem Anhalten der Lademechanik, einer Erhöhung des Positionszählerstandes und zu einer mehrmaligen Abfrage des anliegenden Gleichspannungswertes. Anschließend erfolgt die Errechnung eines mittleren Wertes und die Zuweisung dieses Wertes zu einer Ladepositionsnummer. Mit diesen Schritten wird so lange fortgefahren, bis alle konstruktiv vorgesehenen Positionen vermessen wurden.

Ein anschließender Schritt in einer weiteren Phase C ist ausgeführt, jedoch nicht zwingend notwendig. Hierbei wird die Lademechanik mit geringer Geschwindigkeit in Richtung Bandentladeend-position betrieben und im Prinzip verfahren wie im vorhergehenden Betrieb. Es wird lediglich der Positionszählerstand bei jeder Änderung verringert.

Bei Erreichen der Kondition 1.(Zeit) oder 2.(Strom) oder 3.(Schalter) hat jetzt der Positionszähler wieder den Ausgangswert erreicht. Eine Differenz deutet auf eine Fehlmessung hin, und der Vorgang (Phase (A, B, C)) wird nochmals ausgeführt. Die Einzugsmechanik steht nunmehr in der Ausgangsposition, so daß jetzt umgehend eine Kassette zum Ausführen weiterer Tests eingelegt werden kann. Die gemessenen und zugeordneten Werte werden in einem nicht flüchtigen Speicher, z.B. EEPROM abgelegt und aus diesem nach jedem Einschaltvorgang ausgelesen. Da der Eichbetrieb vorzugsweise ohne Band ausgeführt wird, um z.B. überflüssige Dinge wie z.B. Bandstraffung oder das Einschalten der Kopftrommel zu vermeiden, müssen die Warnsignale wie z.B. "Keine Kassette, Bandende, Bandanfang, Bandriß", bewußt ignoriert werden.

## Patentansprüche

1. Verfahren zur Positionsermittlung in einem Kassettenrecorder mit einer Bandeinfädel- und Ausfädelmechanik mit Positionsschaltern (A,B), wobei die Ausgangssignale der Schalter (A,B) über ein Widerstandsnetzwerk (R₁,R₂,R₃) gekoppelt sind, dessen Ausgang an den Eingang eines A/D-Wandlers (W) angeschlossen ist, **dadurch gekennzeichnet,** daß in einem Eichbetrieb der jeweils einer individuellen Position zugeordnete Spannungswert am Ausgang des Widerstandsnetzwerkes (R₁,R₂,R₃) gemessen, der zugeordnete digitale Wert in einen Speicher eingege-ben und bei Normalbetrieb als Sollwert genutzt wird.

2. Verfahren nach Anspruch 1, **dadurch gekennzeichnet**, daß der Eichbetrieb selbsttätig beendet wird, wenn eine vorbestimmte Anzahl von Positionsänderungen durchlaufen ist.

3. Verfahren nach Anspruch 1, **dadurch gekennzeichnet**, daß der Eichbetrieb in zwei Phasen unterteilt ist, die sich durch die Bewegungsrichtung der Mechanik und die Zählrichtung eines Positionszählers unterscheiden.

4. Verfahren nach Anspruch 1, **dadurch gekennzeichnet**, daß jeweils der momentane Spannungswert in einem Vergleicher mit dem vorangehenden Spannungswert verglichen wird.

5. Verfahren nach Anspruch 4, **dadurch gekennzeichnet**, daß jeweils bei Registrierung einer Abweichung des momentanen Spannungswertes von dem vorangehenden Spannungswert die Bewegung der Mechanik angehalten wird, eine vorbestimmte Anzahl von Spannungsmessungen erfolgt und der Stand eines Positionszählers geändert wird.

6. Verfahren nach Anspruch 4, **dadurch gekennzeichnet**, daß aus der vorbestimmten Anzahl von Messungen der Mittelwert gebildet wird.

7. Verfahren nach Anspruch 2 und 6, **dadurch gekennzeichnet**, daß aus den bei den verschiedenen Phasen gemessenen Mittelwerten ein neuer Gesamtmittelwert errechnet wird.

8. Verfahren nach Anspruch 1, **dadurch gekennzeichnet**, daß der Eichbetrieb bei einer Geschwindigkeit der Mechanik erfolgt, die geringer ist als die Geschwindigkeit der Mechanik bei Normalbetrieb.

9. Verfahren nach Anspruch 8, **dadurch gekennzeichnet**, daß die Verringerung der Geschwindigkeit der Mechanik durch eine Änderung der Einschaltdauer des die Mechanik antreibenden Motors erfolgt.

10. Verfahren nach Anspruch 1, **dadurch gekennzeichnet**, daß die Ausgangsposition für den Eichbetrieb durch eine Schalterabfrage ermittelt wird.

11. Verfahren nach Anspruch 1, **dadurch gekennzeichnet**, daß die Ausgangsposition für den Eichbetrieb durch eine Messung des von dem Widerstandsnetzwerk gelieferten Stromes erfolgt.

12. Verfahren nach Anspruch 1, **dadurch gekennzeichnet**, daß die Ausgangsposition für den Eichbetrieb zeitgesteuert ermittelt wird.

13. Verfahren nach Anspruch 1, dadurch **gekennzeichnet**, daß die Einleitung des Eichbetriebs innerhalb eines Prüfbetriebs erfolgt.

14. Verfahren nach Anspruch 3, 4, 6, 8 und 9, **dadurch gekennzeichnet**, daß die Abfrage der Widerstandsnetzwerkleitung, die Positionszählung, der Vergleich, die Bildung des Mittelwertes, die Ansteuerung des die Mechanik antreibenden Motors und die Speicherung der ermittelten Spannungswerte durch einen Mikroprozessor erfolgen.

## Claims

1. Method for determining the position in a cassette recorder having a tape thread-in and thread-out mechanism with position switches (A,B), in which the output signals of the switches (A,B) are coupled via a resistor network R₁, R₂, R₃), the output of which is connected to the input of an analog-to-digital converter (W), **characterised in that** during a calibrating operation the voltage value assigned to each individual position is measured at the output of the resistor network (R₁, R₂, R₃) the corresponding digital values are entered into a memory and used as a desired value during normal operation.

2. Method according to claim 1, **characterized in that** the calibrating operation ends automatically when a prescribed number of position changes have occured.

3. Method according to claim 1, **characterized in that** the calibrating operation is divided into two phases which are differentiated through the direction of movement of the mechanism and the counting direction of a position counter.

4. Method according to claim 1, **characterized in that** always the instantaneous voltage value is compared with the preceeding voltage value in a comparator.

5. Method according to claim 4, **characteriized in that** each time upon registering a deviation of the instantaneous voltace value from the preceeding voltage value, the movement of the mechanism is stopped, a predetermined number of voltage measurements is carried out and the count of the position counter is altered.

6. Method according to claim 4, **characterized in that** the average value is formed from the predetermined number of measurements.

7. Method according to claim 2 and 6, **characterized in that** a new total average value is calculated from the average values measured for the various phases.

8. Method according to claim 1, **characterized in that** the calibrating operation is performed at a mechanism speed which is lower then the speed of the mechanism during normal operation.

9. Method according to claim 8, **characterized in that** the reduction in mechanism speed is carried out through an alteration to the switch-on period of the motor driving the mechanism.

10. Method according to claim 1, **characterized in that** the starting position for the calibrating operation is determined by a switch inquiry.

11. Method according to claim 1, **characterized in that** the starting position for the calibrating operation is carried out by measuring the current supplied by the resistor network.

12. Method according to claim 1, **characterized in that** the starting position for the calibrating operation is determined in a time-controlled manner.

13. Method according to claim 1, **characterized in that** the initiation of the calibrating operation is carried out within a test operation.

14. Method according to claim 3, 4, 6, 8 and 9, **characterized in that** the inquiry of the resistor network line, the position counting, the comparison, the forming of the average value, the controlling of the motor driving the mechanism and the storing of the voltage value determined are carried out by a microprocessor.

## Revendications

1. Procédé de détermination des positions dans un enregistreur de cassettes comportant un mécanisme de chargement et de déchargement de bande avec des commutateurs de position (A, B), où les signaux de sortie des commutateurs sont couplés par l'intermédiaire d'un réseau de résistances (R1, R2, R3) dont la sortie est connectée à l'entrée d'un convertisseur analogique-numérique (W), procédé **caractérisé en ce que**, dans un mode d'étalonnage, la valeur de tension affectée à une position individuelle est mesurée à la sortie dudit réseau de résistances (R1, R2, R3), que la valeur numérique correspondante est enregistrée dans une mémoire et utilisée comme valeur nominale durant le mode de fonctionnement normal.

2. Procédé selon la revendication 1 **caractérisé en ce que** ledit mode d'étalonnage est subdivisée en deux phases qui se distinguent par le sens de déplacement du mécanisme et le sens de comptage d'un compteur de positions.

3. Procédé selon la revendication 1 **caractérisé en ce que** le mode d'étalonnage s'arrête automatiquement dès qu'un nombre prédéfini de changements de position est passé.

4. Procédé selon la revendication 1 **caractérisé en ce que**, dans un comparateur, la valeur de tension actuelle est comparée avec la valeur de tension précédente.

5. Procédé selon la revendication 4 **caractérisé en ce que** le mouvement du mécanisme est stoppé dès l'enregistrement d'une différence de la tension actuelle par rapport à la tension précédente, ceci étant suivi par un certain nombre de mesures de tension et la modification de la position du compteur.

6. Procédé selon la revendication 4 **caractérisé en ce que** la valeur moyenne est déterminée à partir du nombre prédéfini de valeurs mesurées.

7. Procédé selon les revendications 2 et 6 **caractérisé en ce que** les valeurs moyennes déterminées pendant les diverses phases servent à calculer une nouvelle moyenne globale.

8. Procédé selon la revendication 1 **caractérisé en ce que** le mode étalonnage est effectué à vitesse du mécanisme qui est inférieure à la vitesse que ledit mécanisme adopte en mode normal.

9. Procédé selon la revendication 8 **caractérisé en ce que** la réduction de la vitesse du mécanisme est obtenue grâce à une modification de la durée de fonctionnement du moteur entraînant ledit mécanisme.

10. Procédé selon la revendication 1 **caractérisé en ce que** la position de départ du mode d'étalonnage est définie par une analyse de commutateurs.

11. Procédé selon la revendication 1 **caractérisé en ce que** la position de départ du mode d'étalonnage est définie par mesure du courant fourni par le réseau de résistances.

12. Procédé selon la revendication 1 **caractérisé en ce que** la position de départ du mode d'étalonnage est définie en fonction du temps.

13. Procédé selon la revendication 1 **caractérisé en ce que** le lancement du mode d'étalonnage est effectué pendant une procédure de test.

14. Procédé selon les revendications 3, 4, 6, 8 et 9 **caractérisé en ce que** l'analyse du circuit du réseau de résistances, le comptage des positions, la comparaison, le calcul de la valeur moyenne, la commande du moteur d'entraînement du mécanisme et l'enregistrement des valeurs de tension définies sont assurés par un microprocesseur.
